# EUROPÄISCHE PATENTANMELDUNG

(11) **EP 4 571 676 A1**
(43) Veröffentlichungstag der Anmeldung: **18.06.2025**
(21) Anmeldenummer: 24219322.5
(22) Anmeldetag: 12.12.2024
(51) Int. Cl.: G06V 20/40, G06V 20/52, G06Q 10/08, G06V 10/82, G06V 10/44

(54) **COMPUTERIMPLEMENTIERTES VERFAHREN UND ÜBERWACHUNGSSYSTEM ZUR BESTIMMUNG EINES ZUSTANDS EINER HANDHABUNGSVORRICHTUNG, VERFAHREN ZUM TRAINIEREN ODER UMTRAINIEREN EINES ERSTEN UND/ODER EINES ZWEITEN LERNENDEN ALGORITHMUS, COMPUTERPROGRAMM**

(30) Priorität: 13.12.2023 DE 102023134879
(71) Anmelder: Körber Supply Chain Logistics GmbH, 78467 Konstanz (DE)
(72) Erfinder: Schall, Martin, 78467 Konstanz (DE); Wienecke, Markus, 78359 Orsingen-Nenzingen (DE); Fischer, Marco, 78462 Konstanz (DE); Zettler, Michael, 78476 Allensbach (DE)
(74) Vertreter: Müller Schupfner & Partner Patent- und Rechtsanwaltspartnerschaft mbB (Muc)

(57) **Zusammenfassung**

Es wird ein computerimplementiertes Verfahren zur Bestimmung eines Zustands (10) einer Handhabungsvorrichtung (1) für Poststücke (2) bereitgestellt. Das Verfahren umfasst a) Bestimmen oder Erlangen eines Bilddatenstroms (4) der Handhabungsvorrichtung (1) bei einem Handhaben von Poststücken (2), b) Erzeugen zumindest eines Bildpakets (5,6) aus dem Bilddatenstrom (4), wobei das Bildpaket (5) eine Vielzahl einzelner Bilder (7) umfasst, c) Bestimmen von Merkmalen (8) jedes Bildes (7) eines Bildpakets (5,6) mittels eines ersten lernenden Algorithmus (9), und Bestimmen des Zustands (10) der Handhabungsvorrichtung (1) basierend auf den Merkmalen (8) jedes Bildes (7) eines Bildpakets (5,6) mittels eines zweiten lernenden Algorithmus (11), wobei sich der erste lernenden Algorithmus (9) von dem zweiten lernenden Algorithmus (11) unterscheidet. Ferner wird ein Verfahren zum Trainieren oder Umtrainieren eines erste lernenden Algorithmus (9) und/oder eines zweiten lernenden Algorithmus (11) zum Bestimmen eines Zustands (10) einer Handhabungsvorrichtung ()1 für Poststücke (2), ein Computerprogramm und ein Überwachungssystem zum Bestimmen eines Zustands (10) einer Handhabungsvorrichtung (1) zum Handhaben von Poststücke (2) bereitgestellt.

## Beschreibung

Die vorliegende Erfindung betrifft ein computerimplementiertes Verfahren zur Bestimmung eines Zustands einer Handhabungsvorrichtung für Poststücke, ein Verfahren zum Trainieren oder Umtrainieren eines ersten lernenden Algorithmus und/oder eines zweiten lernenden Algorithmus zum Bestimmen eines Zustands einer Handhabungsvorrichtung für Poststücke, ein Computerprogramm und ein Überwachungssystem zum Bestimmen eines Zustands einer Handhabungsvorrichtung zum Handhaben von Poststücken.

Für eine Überwachung von Handhabungssystemen zum Handhaben von Gegenständen ist es bekannt, Lichtschranken zu verwenden, um eine Position der Gegenstände, welche von den Handhabungssystemen gehandhabt werden, zu bestimmen. Beispielsweise kann ein fehlendes Signal an einer Lichtschranke darauf hindeuten, dass stromaufwärts ein Problem in einem Zufuhrbereich vorliegt.

Lichtschranken können nur an genau einer Stelle des Bandes ein Ergebnis liefern. Dichte Paketströme können eine Lichtschranke lange Zeit blockieren. Dies könnte mit einem Stau verwechselt werden. Die Verwendung von Verfolgungslichtschranken funktioniert nur bei vereinzelten Strömen und erfordert ein dichtes Netz von Lichtschranken, die alle an dieselbe SPS/Computer zur Auswertung melden. Ohne eine zusätzliche Kamera gibt es keine Möglichkeit, die Situation von einem Kontrollraum aus zu beurteilen. Lichtschranken sind oft verschmutzt und liefern falsche Ergebnisse.

Eine alternative Überwachungsmöglichkeit stellen Kameras dar. Hierbei ist es jedoch notwendig, dass Nutzer die Videos kontinuierlich überwachen müssen, um einen Zustand der Handhabungsvorrichtung zu bestimmen.

Sowohl die Lichtschranken als auch die Kameras stellen hierbei eine nicht zufriedenstellende Lösung dar. Genauer gesagt, können die Lichtschranken einen Zustand nur exakt an deren Position ausgeben. Ferner können die Lichtschranken, wenn sie einmal blockiert sind, keine weiteren Signale erzeugen. Die kontinuierliche Überwachung von Kamerabildern erfordert einen hohen Aufwand an manueller Arbeit und ist anfällig für menschliche Fehler, wie beispielsweise Missinterpretationen.

Daher ist es eine Aufgabe der vorliegenden Erfindung, ein Verfahren und eine Vorrichtung zur Bestimmung eines Zustands einer Handhabungsvorrichtung bereitzustellen, bei dem ein Zustand der Handhabungsvorrichtung zum einen zuverlässig und zum anderen effizient bestimmt werden kann.

Die vorliegende Erfindung löst dieses Problem mit einem computerimplementierten Verfahren zur Bestimmung eines Zustands einer Handhabungsvorrichtung mit den Merkmalen des Anspruchs 1, mit einem Verfahren zum Trainieren oder Umtrainieren eines ersten lernenden Algorithmus und/oder eines zweiten lernenden Algorithmus zum Bestimmen eines Zustands einer Handhabungsvorrichtung für Poststücke mit den Merkmalen des Anspruchs 13, mit einem Computerprogramm mit den Merkmalen des Anspruchs 14 und mit einem Überwachungssystem mit den Merkmale des Anspruchs 15.

Gemäß einem Aspekt der vorliegenden Erfindung wird ein computerimplementiertes Verfahren zur Bestimmung eines Zustands einer Handhabungsvorrichtung für Poststücke bereitgestellt. Das Verfahren kann ein Bestimmen oder Erlangen eines Bilddatenstroms der Handhabungsvorrichtung bei einem Handhaben von Poststücken umfassen. Das Verfahren kann ein Erzeugen zumindest eines Bildpakets aus dem Bilddatenstrom umfassen, wobei das Bildpaket eine Vielzahl einzelner Bilder umfasst. Das Verfahren kann ein Bestimmen von Merkmalen jedes Bildes eines Bildpakets mittels eines ersten lernenden Algorithmus umfassen. Das Verfahren kann ein Bestimmen des Zustands der Handhabungsvorrichtung basierend auf den Merkmalen jedes Bildes eines Bildpakets mittels eines zweiten lernenden Algorithmus umfassen. Der erste lernende Algorithmus kann sich von dem zweiten lernenden Algorithmus unterscheiden.

Gegenüber dem bekannten Stand der Technik liefert die vorliegende Erfindung den Vorteil, dass ein Zustand des Handhabungssystems basierend auf einem beliebigen Bilddatenstrom erzeugt werden kann. Mit anderen Worten muss der Bilddatenstrom nicht von einer kalibrierten Quelle, wie beispielsweise einer kalibrierten Videokamera, stammen, sondern kann beispielsweise von willkürlich und zufällig angeordneten Bilddatenquellen stammen. Ferner kann eine kontinuierliche Überwachung der Handhabungsvorrichtung bereitgestellt werden, ohne dass es zu Missinterpretationen kommt. So kann beispielsweise automatisch erkannt werden, ob die im Bilddatenstrom dargestellte Handhabungsvorrichtung fehlerfrei arbeitet oder nicht. Ferner kann eine Zustandserkennung mit geringen Fehlerquoten und einer geringen Zeitverzögerung zwischen Auftreten eines Fehlers und dessen Erkennung bereitgestellt sein. Beispielsweise kann die vorliegende Erfindung Staus (als Beispiel eines Zustands der Handhabungsvorrichtung) von Poststücken auf Förderanlagen (als Beispiel einer Handhabungsvorrichtung), z.B. in Paketlogistikzentren, erkennen. Ein Stau kann eine Blockade eines Bewegungsstroms sein. Beispielsweise können Förderbänder mit hochauflösenden Kameras beobachtet werden, wobei die Kameras nicht kalibriert und willkürlich platziert sind, aber einen Überblick über die die betreffende Förderstrecke im 3D-Raum haben. Bei der Kamera kann es sich um eine 1080p, RGB Kamera handeln. Ein Ziel der Erfindung ist es, automatisch zu erkennen, ob die im Videostrom (d.h. im Bilddatenstrom) der Kamera sichtbare Förderstrecke, gerade blockiert ist oder ein Stau vorliegt. Diese Stauerkennung kann sowohl zuverlässig mit geringen Fehlerquoten als auch mit geringer Zeitverzögerung zwischen Auftreten des Staus und seiner Erkennung realisiert sein.

Im Stand der Technik wird das Problem dadurch gelöst, dass ein Live-Videostream der Kamera auf einem Computermonitor angezeigt wird, oder auf mehreren Monitoren, wenn mehrere Kameras vorhanden sind, die von menschlichen Experten beobachtet werden, die manuell Staus erkennen und melden. Das Problem ist schwer automatisch zu lösen, da die verwendeten Videokameras nicht kalibriert sind, d.h. ihre Position im dreidimensionalen Raum und die Brennweite des Objektivs sind nicht bekannt. Außerdem kann es viele solcher Videokameras innerhalb desselben Paketknotens geben, jede mit einem anderen Blickwinkel und einem anderen Förderband, das beobachtet wird. Dies erschwert die Kalibrierung und damit die Messung im 3-D-Raum. Eine weitere Schwierigkeit ergibt sich aus der Möglichkeit eines nicht linearen Betriebs der Handhabungsvorrichtung. Beispielsweise kann eine Rutsche neue Poststücke einer Handhabungsvorrichtung zuführen, und die Handhabungsvorrichtung kann für kurze Zeit anhalten, damit die Poststücke von der Rutsche auf einem leeren Platz auf der Handhabungsvorrichtung landen können. Solche gezielten Stopps der Handhabungsvorrichtung und damit aller darauf befindlichen Poststücke sollten nicht als ein fehlerhafter Zustand der Handhabungsvorrichtung (z.B. als Stau) erkannt werden.

Der Zustand der Handhabungsvorrichtung kann beispielsweise indikativ dafür sein, ob die Handhabungsvorrichtung fehlerfrei arbeitet. Mit anderen Worten kann der Zustand indikativ dafür sein, ob die Handhabungsvorrichtung, die ihr zugewiesene Aufgabe erledigt oder nicht. Mit anderen Worten kann der Zustand zwei Werte annehmen, nämlich eine fehlerfreie Funktion oder eine fehlerhafte Funktion. Ferner ist es denkbar, dass der Zustand auch Indikativ dafür sein kann, mit welcher Wahrscheinlichkeit welcher Zustand vorliegt. Somit kann genauer abgeschätzt werden, wie eindeutig der jeweilige Zustand vorliegt. Darüber hinaus kann der Zustand auch eine Vorhersage umfassen, nämlich mit welcher Wahrscheinlichkeit welcher Zustand in Zukunft eintreten wird, sodass beispielsweise abgeschätzt werden kann, ob in naher Zukunft mit einem Fehler gerechnet werden muss oder nicht. Dadurch kann eine Vorhersagbarkeit bereitgestellt sein und gegebenenfalls eine Steuerung der Handhabungsvorrichtung darauf eingestellt werden. Bei der Handhabungsvorrichtung kann es sich beispielsweise um ein Förderband, eine Rutsche, einen Sauggreifer, einen Singulierer, einen Sorter und/oder eine Endstelle handeln. Die Handhabungsvorrichtung kann jede Vorrichtung sein, die Poststücke beispielsweise in einem Paketzentrum, abfertigt. Mit anderen Worten kann die Handhabungsvorrichtung eine Vorrichtung sein, die bei der Abfertigung von Poststücken genutzt wird. Die Abfertigung oder das Handhaben von Poststücken kann dabei ein physisches Verlagern von zumindest einem Poststück umfassen. Beispielsweise können die Poststücke bei einem Handhaben befördert, gegriffen, umgelagert, abgelenkt und/oder angesaugt werden. Bei den Poststücken kann es sich beispielsweise um Pakete, Taschen, Versandtaschen, Polybags, Smalls und dergleichen handeln. Der Bilddatenstrom kann ein Video sein. Mit anderen Worten kann der Bilddatenstrom eine Vielzahl von einzelnen Bildern umfassen, die über eine gewisse Zeitspanne ausgegeben werden. Der Bilddatenstrom kann beispielsweise mit 24 Bildern pro Sekunde bereitgestellt werden. Der Bilddatenstrom kann entweder selbst bestimmt werden (beispielsweise durch eine Videokamera) oder kann aus einer Datenbank oder einem Speicher erlangt werden. Mit anderen Worten kann der Bilddatenstrom auch nach einer vorhergehenden Bearbeitung erlangt werden. Der Bilddatenstrom kann dabei einen Handhabungsvorgang von zumindest einem Poststück durch die Handhabungsvorrichtung umfassen. Mit anderen Worten kann der Bilddatenstrom die physische Handhabung von einem oder mehreren Poststücken durch die Handhabungsvorrichtung darstellen. Dabei kann es ausreichend sein, dass der Bilddatenstrom die Handhabungsvorrichtung teilweise darstellt. Aus dem Bilddatenstrom kann dann ein Bildpaket erzeugt werden. Ein Bildpaket kann eine Sammlung mehrerer einzelner Bilder aus dem Bilddatenstrom sein. Somit kann das Bildpaket ein Ausschnitt aus dem Bilddatenstrom darstellen. Das Bildpaket kann dabei einzelne Bilder des Bilddatenstroms direkt umfassen. Vorzugsweise umfasst das Bildpaket zeitlich aufeinanderfolgende Bilder. Mit anderen Worten kann ein einzelnes Bildpaket keine doppelten Bilder umfassen (d. h. keine Bilder, die zum selben Zeitpunkt aufgenommen wurden). Basierend auf dem Bilddatenstrom kann ein Bildpaket oder eine Vielzahl von Bildpaketen erzeugt werden. Nach diesem Schritt der Bilderfassung kann die eigentliche Verarbeitung mittels lernendem Algorithmus (z.B. mittels eines neuronalen Netzes, insbesondere eines tiefen neuronalen Netzes) erfolgen, die vorzugsweise rein end-to-end ohne explizite Zwischenschritte erfolgen kann. So kann das tiefe neuronale Netz als Beispiel eines lernenden Algorithmus durch Anwendung von Backpropagation und Gradientenabstieg durchgängig optimiert werden. Das zumindest eine Bildpaket kann dann dem ersten lernenden Algorithmus zugeführt werden. Der erste lernende Algorithmus kann basierend auf dem Bildpaket für jedes Bild in dem Bildpaket Merkmale erkennen und als Ausgabe bereitstellen. Die Größe der Bildpakete kann konstant sein. Die Größe eines Bildpakets kann so groß gewählt sein, dass ein Zustand (z.B. ein Stau) von einem anderen Zustand der Handhabungsvorrichtung (z.B. einen normalen Betrieb der Handhabungsvorrichtung) unterschieden werden kann. Vorzugsweise ist eine Größe des Bildpakets aber auch klein genug, um keine künstliche Verzögerung zwischen dem Auftreten der physischen Szene und der Verarbeitung des zugehörigen Bildes einzuführen. Für Paketanwendungen scheint eine Bildpaketgröße von vier Sekunden ein guter Kompromiss zu sein. Merkmale können dabei beispielsweise eine Position eines Poststücks in der Handhabungsvorrichtung sein. Ferner kann ein solches Merkmal eine relative Position zweier oder mehrerer Poststücke zueinander und/oder zu der Handhabungsvorrichtung sein. Darüber hinaus kann ein solches Merkmal eine in einem Bild dargestellte Eigenschaft der Handhabungsvorrichtung sein. Beispielsweise kann durch einen bestimmten Bewegungszeitpunkt, eine Bewegung und/oder eine Betätigung der Handhabungsvorrichtung signalisiert sein, dass die Handhabungsvorrichtung in der bestimmten Art und Weise funktioniert. So ist beispielsweise denkbar, dass in dem Bild eine Betriebsleuchte der Handhabungsvorrichtung erkennbar ist, die anzeigt, ob die Handhabungsrichtung derzeit eine Handhabung durchführt. Der erste lernende Algorithmus kann basierend darauf in Verbindung, insbesondere mit Informationen über die Poststücke, ein oder mehrere Merkmale bestimmen. Vorzugsweise kann der erste lernende Algorithmus eine Merkmalskarte für jedes Bild eines Bildpakets erstellen. Eine Merkmalskarte kann beispielsweise zumindest ein Merkmal oder eine Eigenschaft umfassen, das oder die einem oder mehreren Pixeln des Bildes zugewiesen ist. Damit kann eine Position eines Merkmals in dem jeweiligen Bild definiert sein. Die Merkmale können dann einem zweiten lernenden Algorithmus zugeführt werden, der basierend darauf einen Zustand der Handhabungsvorrichtung bestimmen kann. Dabei können ausschließlich die Merkmale dem zweiten lernenden Algorithmus zugeführt werden. Die Bilder dagegen können dem zweiten lernen Algorithmus nicht zugeführt werden. Dabei kann der zweite lernende Algorithmus dazu ausgestaltet sein, basierend auf den Merkmalen, die durch den ersten lernenden Algorithmus bestimmt wurden, einen Zustand der Handhabungsvorrichtung zu bestimmen. Mit anderen Worten können der erste lernende Algorithmus und der zweite lernende Algorithmus für ihre jeweilige Aufgabe unterschiedlich ausgestaltet sein, sodass jeder Algorithmus optimal und effizient arbeiten kann. Folglich können sich der erste lernende Algorithmus und der zweite lernende Algorithmus voneinander unterscheiden. Der Unterschied kann darin bestehen, dass unterschiedliche Eingangsdaten und unterschiedliche Ausgangsdaten bereitgestellt sind. Nichtsdestotrotz können die beiden Algorithmen hintereinander geschaltet sein. Der erste lernende Algorithmus und der zweite lernende Algorithmus können beispielsweise als Module eines übergeordneten Algorithmus dienen. Mit anderen Worten können mittels des ersten lernenden Algorithmus wesentliche Merkmale auf Bildbasis extrahiert werden und dann dem zweiten lernenden Algorithmus zur Verfügung gestellt werden. Der erste lernende Algorithmus und der zweite lernende Algorithmus können also kombiniert werden, um eine durchgängige Bestimmung (beispielsweise Klassifizierung) beim Training zu ermöglichen, wodurch der Gesamtprozess robuster und kostengünstiger bereitgestellt sein kann. Ferner kann der erste lernende Algorithmus und der zweite lernende Algorithmus Ende-zu-Ende optimiert sein oder werden, wodurch das Gesamtsystem sehr robust ist. Die Optimierung kann durch einen überwachten Lernansatz bereitgestellt sein, bei dem annotierte Trainingsdaten kostengünstig bereitgestellt werden können, da diese lediglich aus Kamerabildern in Kombination mit Zeitintervallen (beispielsweise von einem Zeitstempel zum anderen Zeitstempel), die einen bestimmten Zustand der Handhabungsvorrichtung zeigen, bereitgestellt sein kann. Die automatisierte Ausgabe des Zustands der Handhabungsvorrichtung kann eine Arbeitsbelastung eines menschlichen Bedieners verringern und die Fehlerquote des gesamten Erkennungssystems reduzieren.

Vorzugsweise wird der Zustand für jedes Bildpaket bestimmt. Mit anderen Worten können dem zweiten lernenden Algorithmus lediglich die Merkmale eines Bildpakets zur Verfügung gestellt werden. Damit muss der zweite lernende Algorithmus selbst keine Eigenschaften oder Grundbedingungen aus den Bildern eines Bildpakets bestimmen. Die Ausgabe des zweiten lernenden Algorithmus kann dabei ein einzelner Zustand für das gesamte Bildpaket (d.h. für alle in dem Bildpaket umfassten Bilder) sein. Somit kann das Verfahren eine gesteigerte Effizienz aufweisen.

Vorzugsweise bestimmt der erste lernende Algorithmus eine Merkmalskarte für jedes Bild eines Bildpakets. Mit anderen Worten kann einem oder mehreren Pixeln eines Bildes eine Eigenschaft und/oder Merkmale zugewiesen werden. Dadurch kann eine räumliche Verteilung der verschiedenen Eigenschaft und/oder Merkmale in einem jeden Bild definiert werden. Somit kann der zweite lernende Algorithmus auch beispielsweise eine relativ räumliche Anordnung verschiedener Eigenschaft und/oder Merkmale zueinander berücksichtigen.

Vorzugsweise ist das Erzeugen des zumindest einen Bildpakets parameterfrei. Mit anderen Worten werden keine anderen Parameter für die Erstellung des zumindest einen Bildpakets genutzt. Dadurch sind auch keine weiteren Informationen notwendig, die dem System zugeführt werden müssten. So müssen keine Informationen über die Kamera wie Blickwinkel, Brennweite, Blende, Verschlusszeit und dergleichen zur Verfügung gestellt werden. Mit anderen Worten ist es für das vorliegende Verfahren ausreichend, lediglich die Bilder aus einem Bilddatenstrom heranzuziehen. Damit kann das Verfahren sehr einfach etabliert und angewendet werden. Vorzugsweise bezeichnen Parameter ausschließlich Kameraparameter (wie beispielsweise Blende, Belichtung, Fokus und dergleichen). Mit anderen Worten kann mit Parametern kein Bildausschnitt, Blickwinkel, Bilder pro Zeiteinheit und dergleichen gemeint sein.

Vorzugsweise ist die Größe von mehreren Bildpaketen gleich groß. Mit anderen Worten kann, wenn mehrere Bildpakete vorgesehen sind, jedes Bildpaket dieselbe Anzahl an einzelnen Bildern umfassen. Dadurch ist sichergestellt, dass die lernenden Algorithmen stets zuverlässig arbeiten. Bei einer variierenden Anzahl von Bildern in den Bildpaketen kann nicht sichergestellt sein, dass die lernenden Algorithmen das gewünschte Ergebnis ausgeben.

Vorzugsweise deckt ein Bildpaket eine Zeitspanne von vier Sekunden ab. Mit anderen Worten umfasst ein Bildpaket vorzugsweise ein erstes Bild und ein letztes Bild, wobei der zeitliche Abstand zwischen dem ersten Bild und dem letzten Bild vier Sekunden beträgt. Somit kann ein Bildpaket indikativ für eine vier Sekunden andauernden Betriebsausschnitt der Handhabungsvorrichtung sein. In diesem Fall wurde herausgefunden, dass bei der Verarbeitung beziehungsweise Handhabung von Poststücken dieser Zeitspanne die besten Ergebnisse liefert hinsichtlich Genauigkeit und Minimierung der Datenmenge.

Vorzugsweise generiert der erste lernende Algorithmus die Merkmale jedes Bildes bildweise. Mit anderen Worten kann der erste Algorithmus dazu ausgestaltet sein, Bild für Bild die Merkmale des jeweiligen Bildes zu bestimmen. Dadurch kann jedes Bild ausreichend berücksichtigt werden und sämtliche Merkmale, die in dem jeweiligen Bild dargestellt sind, bestimmt werden. Vorzugsweise unterscheiden sich der erste lernende Algorithmus und der zweite lernende Algorithmus durch eine Berücksichtigung einer räumlichen Dimension voneinander. Mit anderen Worten kann der zweite lernende Algorithmus die räumliche Dimension weglassen, wohingegen der erste lernende Algorithmus die räumliche Dimension berücksichtigen kann. Anders ausgedrückt, kann der erste lernende Algorithmus die Merkmale, welche in jedem einzelnen Bild bestimmt werden, einer räumlichen Position zuordnen. Demgegenüber kann der zweite lernende Algorithmus lediglich dazu ausgestaltet sein, die von dem ersten lernenden Algorithmus bestimmten Merkmale zu klassifizieren. Dadurch kann der zweite lernende Algorithmus deutlich effizienter ausgestaltet sein, verglichen mit dem Fall, wenn dieser ebenfalls eine räumliche Dimension mitberücksichtigen müsste. Insgesamt kann das Verfahren dadurch deutlich effizienter bereitgestellt sein. Ferner ist denkbar, dass bei dem zweiten lernenden Algorithmus zusätzlich zu der räumlichen Dimension auch die zeitliche Dimension weggelassen wird. Damit kann eine weitere Effizienzsteigerung bewirkt werden.

Vorzugsweise handelt es sich bei dem ersten lernenden Algorithmus um ein künstliches neuronales Netz, insbesondere ein Convolutional Neural Network. Künstliche neuronale Netze können als universelle Funktionsapproximatoren dienen. Daten werden dabei von der Eingabe - bis zur Ausgabeschicht propagiert, wobei eine Aktivierungsfunktion für eine nicht-Linearität sorgt. Bei einem Trainieren des künstlichen neuronalen Netzes kann ein Fehler bestimmt werden und mithilfe von Fehlerrückführung und einem Optimierungsverfahren können Gewichte, welche innerhalb des künstlichen neuronalen Netzes genutzt werden, schichtweise angepasst werden. Das künstliche neuronale Netz ist besonders bei einer Zuordnung von einer Vielzahl von Eingabedaten auf eine begrenzte Anzahl (d. h. eine deutlich geringere Anzahl) von Ausgabedaten nützlich. So können beispielsweise 100.000 bis Millionen Bildpunkte (beispielsweise Pixel) in eine im Vergleich dazu geringe Anzahl von erlaubten Ergebnissen überführt werden. Bei der vorliegenden Ausführungsform können die Eingabedaten des ersten neuronalen Netzes die Bilder eines Bildpakets sein. Die Ausgabedaten dagegen können die Merkmale jedes Bildes sein. Bei dem Convolutional Neural Network (zu Deutsch etwa faltendes neuronales Netz), kann es sich um einen Spezialfall eines künstlichen neuronalen Netzes handeln. Die Struktur eines künstlichen Convolutional Neural Networks kann aus einem oder mehreren Convolutional Layern, gefolgt von einem Pooling Layer bestehen. Beispielsweise ist eine Batch-Normalisierung vorgesehen. Diese Einheit kann sich prinzipiell beliebig oft wiederholen (beispielsweise abhängig von der Bildauflösung der einzelnen Bilder und/oder dem Pooling), wobei man bei ausreichenden Wiederholungen ein Deep Convolutional Neural Network erlangt. Beispielsweise im Vergleich zu einem mehrlagigen Perzeptron (beispielsweise eine Multi-Layer-Perzeptron) können drei wesentliche Unterschiede des Convolutional Neural Networks realisiert sein, nämlich eine 2D- oder 3D-Anordnung der Neuronen, geteilte Gewichte und lokale Konnektivität. Als Eingabewert zu dem Convolutional Neural Networks kann eine zwei- oder dreidimensionale Matrix (beispielsweise ein Pixel eines Graustufen- oder Farbbildes) vorliegen. Entsprechend können die Neuronen in dem Convolutional Layer angeordnet sein.

Die Aktivität jedes Neurons kann über eine diskrete Faltung berechnet werden. Dabei kann schrittweise eine vergleichsweise kleine Faltungsmatrix (Filterkernel) über den Eingabewert bewegt werden. Der Eingabewert eines Neurons im Convolutional Layer kann sich dann als inneres Produkt des Filterkernel mit dem aktuell unterliegenden Bildausschnitt berechnen. Dementsprechend können benachbarte Neuronen im Convolutional Layer auf sich überlappende Bereiche reagieren. Der mittels diskreter Faltung ermittelte Eingabewert eines jeden Neurons kann anschließend von einer Aktivierungsfunktion (beispielsweise einer Rectified Linear Unit, (RELU)) in einen Ausgabewert verwandelt werden. In einem Pooling Layer kann eine überflüssige Information verworfen werden. So ist beispielsweise oft eine exakte Position einer Kante im Bild von untergeordnetem Interesse, da die ungefähre Lokalisierung eines Merkmals ausreichend ist. Dadurch kann eine Datenreduktion erreicht werden. Nach einigen sich wiederholenden Einheiten aus Convolutional Layer und Pooling Layer kann das künstliche neuronale Netz einen oder mehrere Fully-Connected Layer aufweisen. Eine Anzahl der Neuronen im Fully-Connected Layer (der beispielsweise der letzte Layer im neuronalen Netz sein kann) kann dann mit der Anzahl an unterschiedlichen Merkmalen, die das neuronale Netz bestimmen soll, entsprechen. Die Ausgabe der letzten Schicht des Convolutional Neural Networks kann beispielsweise durch eine Softmax-Funktion, einer Translations - aber nicht skaleninvarianten Normalisierung über alle Neuronen im letzten Layer, in eine Wahrscheinlichkeitsverteilung überführt werden. Die Softmax-Funktion ist besonders bei der letzten Schicht des Convolutional Neural Networks von Vorteil, die einem Nutzer Informationen (z.B. Ergebnisse) ausgibt. Dadurch kann eine Ausgabe des künstlichen neuronalen Netzes eine Wahrscheinlichkeit angeben, mit der ein bestimmtes Merkmal vorliegt.

Vorzugsweise handelt es sich bei dem zweiten lernenden Algorithmus um ein künstliches neuronales Netz, insbesondere ein Multi-Layer Perceptron oder Long Short-Term Memory. Hinsichtlich des künstlichen neuronalen Netzes gilt das obige bei der vorliegenden Ausführungsform analog. Das Multi-Layer Perceptron (zu Deutsch mehrlagiges Perzeptron, im Folgenden als MLP bezeichnet) kann aus zumindest drei Schichten von Neuronen bestehen, nämlich einer Eingangsschicht, einer oder mehrerer verdeckter Schichten und eine Ausgabeschicht. Das mehrlagige Perceptron kann als gerichteter azyklischer Graph betrachtet werden, bei dem die Neuronen in einer Schicht mit den Neuronen der nachfolgenden Schicht vollständig verbunden sein können. Die Verbindung zwischen den einzelnen Neuronen zweier aneinander angrenzender Schichten kann ein Gewicht oder eine Variable aufweisen, die einen Weitergabewert von dem einen Neuron zu dem anderen Neuron beeinflussen kann. Die Gewichte können während des Trainings angepasst werden. Um eine gewichtete Summe eines Neurons zu berechnen, können die Eingangswerte mit entsprechenden Gewichten multipliziert und anschließend aufsummiert werden. Die gewichteten Summen können für jedes Neuron in den verdeckten Schichten und der Ausgabeschicht berechnet werden. Nachdem die gewichtete Summe berechnet wurde, kann sie durch eine Aktivierungsfunktion verarbeitet werden, um den Ausgangswert des Neurons zu bestimmen. Die Aktivierungsfunktion kann nicht lineare Eigenschaften in die Ausgabe des Neurons einführen und kann es dem Multi-Layer Perceptron ermöglichen, komplexe Zusammenhänge zu erlernen. Als Aktivierungsfunktion kann beim Multi-Layer Perceptron die Sigmoidfunktion verwendet werden. Ferner kann auch bei dem Multi-Layer Perceptron die Rectified Linear Unit-Funktion verwendet werden. Die Ausgabeschicht des Multi-Layer Perceptrons kann dann eine Vorhersage des Netzwerkes generieren. Jedes Neuron in der Ausgabeschicht kann mit den Neuronen in der letzten verdeckten Schicht verbunden sein. Die Ausgangswerte der Neuronen in der Ausgabeschicht können die Vorhersage des Multi-Layer Perceptrons für die gegebene Eingabe repräsentieren. Wenn ein mehrschichtiges Perzeptron verwendet wird, können die durch Anwendung des ersten lernenden Algorithmus auf die einzelnen Bilder erzeugt Merkmale, für alle Bilder innerhalb des Bildpakets gestapelt werden. Danach, können die zeitliche und räumliche Dimension weggelassen werden, um die Sammlung von Merkmalen aus dem Bildpaket als eine "Tasche von Merkmalen" zu behandeln. Dadurch wird der explizite Begriff von Zeit und Raum aus dem neuronalen Netz entfernt, aber ansonsten kann das neuronale Netz komplexe Abhängigkeiten zwischen verschiedenen Zeitpunkten lernen. Das mehrschichtige Perzeptron kann mehrere Feedforward-Schichten, die jeweils eine Stapelnormalisierung und eine nichtlineare Aktivierungsfunktion aufweisen, umfassen. Die letzte neuronale Schicht kann keine Batch-Normalisierung aufweisen und eine Softmax-Funktion als nichtlineare Aktivierungsfunktion aufweisen.

Zusätzlich oder alternativ kann auch ein Long Short-Term Memory als der zweite lernende Algorithmus verwendet werden. Der Long Short Term Memory (im Folgenden als LSTM bezeichnet) kann ebenfalls Eingangsdaten auf Ausgangsdaten abbilden. Dabei kann schrittweise eine vergleichsweise kleine Faltungsmatrix (Filterkernel) über die Eingabewert bewegt werden. Vorteil an einem LSTM-Modul ist, dass es einen relativ konstanten und anwendbaren Fehlerfluss ermöglicht. Generell kann das LSTM einen ähnlichen Aufbau mit Eingangsschicht, verdeckte Mittelschichten und Ausgangschicht aufweisen wie bei einem MLP. Bei einem LSTM-Modul kann kontrolliert werden, welche Informationen in eine innere Zelle hineinlaufen und hinauslaufen sollen. Das LSTM kann dann dazu ausgestaltet sein, Informationen zum Zustand zu entwerfen oder hinzuzufügen, indem regulierte Strukturen (beispielsweise Tore oder Gates) vorgesehen sind. Bei LSTM Modulen sind wie bei dem oben beschriebenen Netz Module kettenartig hintereinandergeschaltet, sie haben jedoch eine andere interne Struktur. Insbesondere die vorgesehenen Gates bieten die Möglichkeit, Informationen optional durchzulassen. Statt einer neuronalen Funktion kann es im LSTM-Modul Gates geben, die wie folgt ausgestaltet sein können. Ein Input Gate kann einen Ausmaß, in dem ein neuer Wert in der Zelle einfließt steuern. Ein Forget Gate kann das Ausmaß steuern, indem ein Wert in der Zelle verbleibt, und ein Output Gate kann ein Ausmaß steuern, indem der Wert in der Zelle zur Berechnung für das nächste Modul der Kette verwendet wird. Dadurch kann insgesamt ein Verschwinden der Fehler oder ein sich übermäßig ausweitender vermieden werden. Bei der Wahl eines LSTM-Netzes können die durch Anwendung des ersten lernenden Algorithmus aus den einzelnen Bilder extrahierten Merkmale gestapelt werden. Im Unterschied zum MLP-Ansatz können bei dem LSTM nur die räumlichen Dimensionen weggelassen werden, die zeitliche Dimension können jedoch erhalten bleiben. Dadurch kann der explizite Begriff der Zeit erhalten bleiben, der für LSTM-Netze notwendig ist. Das LSTM-Netzes kann aus mehreren bidirektionalen LSTM-Schichten bestehen. Die letzte Schicht des neuronalen Netzes kann eine vollständig verbundene Neuronenschicht ohne Stapelnormalisierung und eine Softmax-Funktion sein, um das Zweiklassenproblem zu erleichtern. Beide Varianten des neuronalen Netzes (MLP und LSTM) können die Bilder eines Bildpakets durch Merkmalsextraktion durch den ersten lernenden Algorithmus und Klassifizierung des gesamten Bildpakets in einem Zweiklassenproblem bearbeiten. Der Unterschied zwischen MLP- und LSTM-Netzen kann der explizite Begriff der Zeit, der weggelassen (MLP) oder beibehalten (LSTM) wird, sein.

Vorzugsweise wird bei dem Bestimmen des Zustands der Handhabungsvorrichtung mittels des Multi-Layer Perceptrons die räumliche Dimension weggelassen. Mit anderen Worten kann nach dem Schritt das Bestimmen von Merkmalen jedes Bildes eines Bildpakets ein Entfernen der räumlichen und zeitlichen Dimension vorgesehen sein. Dadurch kann dem Multi-Layer Perceptron lediglich eine Sammlung von Merkmalen (beispielsweise eine Tasche von Merkmalen) zugeführt werden. Dadurch kann das Bestimmen des Zustands der Handhabungsvorrichtung vereinfacht und beschleunigt werden. Mit anderen Worten kann hierbei kein Unterauswahlverfahren in der zeitlichen Dimension vorgesehen sein.

Vorzugsweise wird bei dem Bestimmen des Zustands der Handhabungsvorrichtung mittels des Long-Short-Term Memories die räumliche Dimension weggelassen. Durch das Weglassen der räumlichen Dimension bei dem LSTM als den zweiten lernenden Algorithmus kann dieser in seiner Effizienz gesteigert sein. Nichtsdestotrotz kann dennoch eine räumliche Dimension mitberücksichtigt werden.

Vorzugsweise wird der Bilddatenstrom von einer Videokamera erzeugt oder erlangt. Mit anderen Worten kann der Bilddatenstrom von einer gewöhnlichen Videokamera aufgenommen werden, die beispielsweise aus Überwachungszwecken vorgesehen ist. Die Videokamera muss dabei auch nicht explizit auf die Handhabungsvorrichtung ausgerichtet sein, sondern es ist ausreichend, wenn die Handhabungsvorrichtung zumindest teilweise im Bild der Videokamera erkennbar ist. Dies bietet den Vorteil, dass auch gewöhnliche Überwachungskameras genutzt werden können, um den Bilddatenstrom zu erzeugen. Ferner kann es sich bei der Videokamera um eine bewegliche Kamera handeln, die in festgelegten Intervallen einen bestimmten Bereich abbildet, in welchem die Handhabungsvorrichtung vorgesehen ist.

Vorzugsweise kann es sich bei der Videokamera um eine nicht kalibrierte Videokamera handeln. Eine Kalibrierung kann beispielsweise durch Aufnahme der konkreten Position und des Blickwinkels der Kamera realisiert sein. Ferner können bei einer Kalibrierung Referenzmarken im Raum vorgesehen sein, um die Bilddaten räumlichen Koordinaten zuordnen zu können. Dies ist bei der vorliegenden Erfindung nicht notwendig, da der erste lernende Algorithmus und der zweite lernende Algorithmus als Ende-zu-Ende lernender Algorithmus vorgesehen sind. Genauer gesagt werden Merkmale auch ohne Kalibrierung des Bilddatenstroms erkannt (beispielsweise durch den ersten lernenden Algorithmus). Dadurch ist ein Einsatz der vorliegenden Erfindung problemlos und kosteneffizient möglich. Ferner kann ein bestehendes Videokamerasystem verwendet werden.

Vorzugsweise wird der Bilddatenstrom von einer Vielzahl von Videokameras erlangt. Mit anderen Worten können die Blickwinkel jeder Kamera unterschiedlich sein. Somit kann der Bilddatenstrom aus unterschiedlichen Bildern mit unterschiedlichen Blickwinkeln zusammengesetzt sein. In einem solchen Fall ist es vorzusehen, dass ein Bildpaket nur Bilder umfasst, die aus demselben Blickwinkel aufgenommen worden sind. Bei einem solchen Fall ist es denkbar, dass der Bilddatenstrom von mehreren Videokameras pro Kamera parallel zueinander verarbeitet wird.

Vorzugsweise umfasst das Verfahren ferner ein Bestimmen eines Bereichs von Interesse in den Bildern, wobei insbesondere nur die Merkmale im Bereich von Interesse bei der Bestimmung des Zustands zugrunde gelegt werden. Mit anderen Worten kann nur ein Bereich der Bilder berücksichtigt werden, der tatsächlich von Interesse zur Bestimmung des Zustands der Handhabungsvorrichtung ist. Dies ist besonders dann von Vorteil, wenn beliebige Bild-Stromdaten für eine solche Bestimmung verwendet werden. Damit können robuste Merkmale bei Anwendung des ersten lernenden Algorithmus erlernt werden sowie bestimmte Bereiche in den Bildern nicht zu betrachten, die nicht von Interesse sind. Solche Bereiche können beispielsweise räumliche Bereiche sein, in denen Poststücke zwischengelagert werden, oder in denen menschliche Arbeiter entlang gehen. Darüber hinaus kann die Vorhersagegenauigkeit des lernenden Algorithmus weiter verbessert werden, indem man dem lernenden Algorithmus den interessierenden Bereich zur Verfügung stellt, in dem die Handhabungsvorrichtung im entsprechenden Blickwinkel sichtbar ist. Dieser Bereich von Interesse kann als schwarze (0 = nicht mit der Interessebereich) oder Weise (1 = Interessenbereich) Pixelmaske kodiert sein. Eine solche Pixelmaske ist kostengünstig zu erstellen, da sie nur einmal pro Kamerastandpunkt (d. h. einmal für jeden Blickwinkel) durchgeführt werden muss. Die Pixelmaske für den interessierenden Bereich, die dem aktuellen Blickwinkel entspricht, kann dann verwendet werden, um die Pixel zu maskieren, die nicht Teil des interessierenden Bereichs sind. Vorzugsweise wird die Pixelmaske nach dem Bestimmen der Merkmale jedes Bildes angewendet. Mit anderen Worten kann die Pixelmaske zwischen der Anwendung des ersten lernenden Algorithmus und der Anwendung zweiten lernenden Algorithmus vorgesehen sein. Somit können die Merkmale, die von dem ersten lernenden Algorithmus ausgegeben werden, maskiert werden. Damit werden die Merkmale, die nicht einem Bereich von Interesse entsprechen, dem zweiten lernenden Algorithmus nicht zugeführt, wodurch dieser effizienter arbeiten kann. Durch dieses herangehen können sowohl robuste Merkmale innerhalb des ersten lernenden Algorithmus erlernt werden, als auch Bereiche nicht zu betrachten, die nicht von Interesse sind.

Vorzugsweise kann der Bereich von Interesse manuell durch einen Nutzer festgelegt werden. Mit anderen Worten kann für jeden Kamerastandpunkt (für jeden Blickwinkel der Kamera), einmalig definiert werden, welcher Bereich von Interesse ist (beispielsweise, wo die Handhabungsvorrichtung vorgesehen ist) und/oder welcher Bereich weniger oder nicht von Interesse ist. Ferner ist es denkbar, dass der der Bereich von Interesse automatisch festgelegt wird. Dies kann beispielsweise zusätzlich durch den ersten lernenden Algorithmus erfolgen. Mit anderen Worten kann der erste lernenden Algorithmus bestimmen, welche Bereiche in den Bildern von Interesse sind und welche nicht. Beispielsweise kann dies auf Basis von Unterschieden zwischenzeitlich nacheinander aufgenommenen Bildern bestimmt werden. Damit kann erkannt werden, wo sich in den Bildern, insbesondere dauerhaft, nichts bewegt und definiert werden, dass dieser Bereich von verringertem Interesse ist.

Vorzugsweise gibt der Zustand an, wie wahrscheinlich es ist, dass ein erster Zustand und ein zweiter Zustand vorliegt. Mit anderen Worten kann die Ausgabe des zweiten lernenden Algorithmus eine probalistische Zuordnung sein, ob die Bildpakete, die als Eingabe dem zweiten lernenden Algorithmus zugeführt werden (beispielsweise als Stapel von Eigenschaften) einen ersten Zustand oder zweiten Zustand aufweist. Damit kann der erste Zustand und/oder der zweite Zustand bewertet werden. Der erste Zustand kann beispielsweise bedeuten, dass ein Stau vorliegt. Der zweite Zustand kann beispielsweise bedeuten, dass kein Stau vorliegt. Mit anderen Worten kann eine eindeutige Bestimmung eines Zustands oft nicht möglich sein, weswegen eine probalistische Zuordnung hilfreich ist. Ferner ist denkbar, dass bei einer weiteren Verarbeitung die Wahrscheinlichkeit, dass ein erster oder zweiter Zustand eingenommen wird, zugrunde gelegt werden kann, um weitere Steuerungen zu implementieren.

Vorzugsweise ist der Zustand indikativ für eine Wahrscheinlichkeit, dass ein Stau von Poststücken, senkrecht stehende Poststücke, beschädigt Poststücke, Doppel-/Mehrfachpackungen von Poststücken, von der Handhabungsvorrichtung gefallene Poststücke, steckengebliebene Poststücke, verschüttete Flüssigkeiten und/oder loser Poststückinhalt in der Handhabungsvorrichtung vorliegt. Die vorgenannten Zustände können als Fehlzustände bei der Handhabung von Poststücken gelten. Mit anderen Worten ist bei Vorliegen eines solchen Zustands eine Anpassung der Steuerung der Handhabungsvorrichtung oder ein manueller Eingriff eines Nutzers notwendig. Ein Stau von Poststücken kann dann vorkommen, wenn Poststücke sich in der Handhabungsvorrichtung (beispielsweise einem Förderband) so verlagern, dass diese sich gegenseitig blockieren. In diesem Fall ist ein Weitertransport der Poststücke verhindert. Senkrecht stehende Poststücke dagegen können beispielsweise Poststücke sein, die mit ihrer kleinsten Fläche auf der Handhabungsvorrichtung aufliegen. Solche Poststücke sind nachteilig, da es bei einem Umfallen des Poststücks zu Folgeproblemen kommen kann. Beschädigte Poststücke, können Poststücke sein, bei dem die Umverpackung beispielsweise aufgebracht ist. Doppel-/Mehrfachverpackungen von Poststücken kann beispielsweise ein Poststück umfassen, welches in einer Tüte befindlich ist. Eine solche Mehrfachverpackung kann bei der Handhabung der Poststücke zu Fehlern oder sogar Beschädigungen der Handhabungsvorrichtung führen. Von der Handhabungsvorrichtung gefallene Poststücke können beispielsweise solche Poststücke umfassen, die unabsichtlich von einer Handhabungsvorrichtung gefallen sind und sich somit einer Handhabung entziehen. Beispielsweise kann es sich hierbei um Poststücke handeln, die von einem Förderband gefallen sind. Steckengebliebene Poststücke können Poststücke umfassen, die sich nicht durch die Handhabungsvorrichtung weiter Handhaben lassen. Hierbei muss es nicht zwangsläufig zu einem Stau kommen, es kann sich hierbei beispielsweise um ein Poststück handeln, welches an einer Weiche einer Fördervorrichtung hängen geblieben ist und sich nicht weiter bewegt. Verschüttete Flüssigkeiten können beispielsweise aus Poststücken ausgetretene Flüssigkeiten sein, was einen Betrieb der Handhabungsvorrichtung negativ beeinflussen kann. Ferner kann es sich bei den Flüssigkeiten auch um Schmier- oder Betriebsstoffe der Handhabungsvorrichtung selbst handeln, sodass es aufgrund dessen zu einem negativen Einfluss auf die Handhabungsvorrichtung kommen kann.

Vorzugsweise kann das Verfahren ferner umfassen, ein Bewerten des Zustands, wobei die Bewertung indikativ für eine Qualität des Zustands ist. Das Ergebnis der Anwendung des zweiten lernenden Algorithmus wird vorzugsweise nach dessen Bestimmung an einen Nutzer übermittelt. Der Nutzer kann dann entsprechend Gegenmaßnahme ergreifen (beispielsweise manuell eingreifen). Um eine Übermittlung an den Nutzer zu vereinfachen, können die Ergebnisse bewertet werden. So kann beispielsweise jedem Ergebnis eine Bewertung zugeordnet werden. Die Bewertung kann dann Indikativ für eine Qualität des Zustands sein. Qualität kann hierbei so verstanden werden, dass diese angibt, wie bedeutend oder wichtig der Zustand ist. Denkbar ist es hier eine Farbcodierung vorzusehen, die abhängig von einer angezeigten Farbe signalisieren kann, ob ein kritischer, annähernd kritischer oder unkritischer Zustand vorliegt. Beispielsweise kann hier eine Art Ampel-System vorgesehen sein, bei dem unkritische Ergebnisse mit grüner Farbe markiert werden. Hier ist beispielsweise denkbar, dass die zugeordneten Bilder grün umrandet werden. Detektiert der zweite lernende Algorithmus jedoch einen Fehler (beispielsweise einen der oben genannten Umstände) kann sich die Bewertung des Zustands ändern. Beispielsweise kann direkt nach einem Wechsel des Zustands (d. h. von einem problemlosen Betrieb zu einem beeinflussten Betrieb) die Farbmarkierung eine orangene annehmen. Dies kann dem Nutzer dabei helfen entsprechende Gegenmaßnahmen nicht direkt ausführen zu müssen, aber dennoch auf einen etwaig eintretenden Fehlerfall vorbereitet zu sein. Genauer gesagt kann beispielsweise bei einem Erkennen eines Staus in Realität tatsächlich ein Stau vorliegen, dieser kann sich jedoch unter Umständen auch von selbst wieder auflösen. Daher kann beispielsweise die Qualität des Zustands abhängig von der Dauer des Zustands sein. Mit anderen Worten kann die Qualität des Zustands sich ändern, wenn ein bestimmter Zustand für die gewisse Dauer anhält. Vorzugsweise wird bei dem bewerten die Qualität des Zustands, basierend auf einer Dauer des Zustands bestimmt. So kann beispielsweise ein als Fehler anfällig eingestufter Zustand mit orangener Farbe markiert werden. Bleibt die Klassifizierung auf den gefährdeten Zustand beispielsweise für mehrere Sekunden hintereinander kann die orangene Farbe in eine rote Farbe wechseln. Ferner kann bei einer großen Anzahl von unterschiedlichen Kamerastandpunkten diese weiter gefiltert werden, indem dem Nutzer nur diejenigen Standpunkte angezeigt werden, die derzeit entweder orange oder rot markiert sind oder dies vor kurzem waren, jetzt aber wieder grün markiert sind. Mit anderen Worten können so die Informationen, die einem Nutzer bereitgestellt werden lediglich auf diejenigen Information beschränkt werden, die tatsächlich für den Nutzer von Bedeutung sind. Damit kann einem menschlichen Bediener oder Nutzer signalisiert werden, wenn ein Stau mehrere Sekunden lang anhält und so eine Fehlerquote bei einer Bestimmung des Zustands reduziert werden. Ferner können unnötig ausgelöste Gegenmaßnahmen vermieden werden. Dadurch kann die Arbeitsbelastung der menschlichen Bediener verringert werden, indem diese nicht jede Information bearbeiten müssen und zudem nicht bei jedem fehlerhaften Zustand direkt Gegenmaßnahmen einleiten müssen.

Vorzugsweise umfasst, das Erzeugen des zumindest einen Bildpakets ein Skalieren und/oder Anpassen der Auflösung der Bilder des Bilddatenstroms, insbesondere ein Skalieren auf einen RGB-Wert. Der Bilddatenstrom kann beispielsweise mit 1080p Kameras aufgenommen werden. Ferner kann sich bei den Kameras um RGB-Kameras handeln. Zur optimalen Verarbeitbarkeit der Bilder können die Bilder des Bilddatenstroms auf eine Standardauflösung und Skalierung der RGB-Werte normalisiert werden. Dies liefert den Vorteil, dass auch ein Bilddatenstrom von unterschiedlich konfigurierten Kameras verarbeitet werden kann. Mit anderen Worten kann der Bilddatenstrom aus unterschiedlichen Bildern zusammengesetzt sein, die beispielsweise eine unterschiedliche Auflösung, aufweisen. Selbst ein solcher Bilddatenstrom kann für das vorliegende Verfahren verwendet werden, da durch die Normalisierung stets dieselben Randbedingungen herrschen können.

Vorzugsweise werden vor dem Bestimmen des Zustands der Handhabungsvorrichtung die Merkmale der Bilder eines Bildpakets gestapelt. Mit anderen Worten können die Bilder eines jeden Bildpakets gestapelt werden. Dies kann beispielsweise durch den ersten lernenden Algorithmus geschehen. Damit kann die Eingabe in den zweiten lernenden Algorithmus ein Stapel von Bildern sein, der genau den Bildern eines Bildpakets entspricht. Der zweite lernende Algorithmus kann dann jedem Stapel einen Zustand der Handhabungsvorrichtung zuweisen. Mit anderen Worten kann der Stapel von Bildern auch ein Stapeln der Eigenschaften oder Merkmale sein, die durch den ersten lernenden Algorithmus bestimmt worden sind. Mit anderen Worten können die Merkmale jedes Bildes eines Bildpakets gestapelt werden. Damit kann beispielsweise eine Änderung eines Merkmals über die Zeit (d.h. während einer Zeitspanne, die von dem Bildpaket abgedeckt ist) durch den zweiten lernenden Algorithmus berücksichtigt werden. Damit ist ein effizientes Handhaben ermöglicht. Ferner ist die Übergabe zwischen dem ersten lernenden Algorithmus und dem zweiten lernenden Algorithmus vereinfacht, da beide als Module eines übergeordneten lernenden Algorithmus angesehen werden können.

Vorzugsweise umfasst der Bilddatenstrom fünf Bilder pro Sekunde. Genauer gesagt kann der Bilddatenstrom der für das Erzeugen zumindest eines Bildpakets zugrunde gelegt wird, fünf Bilder pro Sekunde umfassen. Der von der Videokamera aufgenommene Bilddatenstrom kann dabei eine größere Bildfrequenz (FPS) aufweisen. Somit kann der Schritt des Erzeugens des zumindest einen Bildpakets zusätzlich auch ein Einstellen der Bildfrequenz umfassen. Damit können die Eingangsdaten zu dem lernenden Algorithmus optimiert werden, sodass der lernende Algorithmus effizient arbeiten kann.

Vorzugsweise umfasst jedes Bildpaket 20 Bilder. Mit anderen Worten kann ein Bildpaket eine Zeitspanne von vier Sekunden während des Handhabungsbetriebs der Handhabungsvorrichtung abdecken. In dieser Hinsicht wurde herausgefunden, dass diese überwachte Zeitspanne optimal ist, um den Zustand einer Handhabungsvorrichtung von Poststücken zu erkennen.

Vorzugsweise ist das Bestimmen des Zustands der Handhabungsvorrichtung ein Klassifizieren der Merkmale des Bildpakets. Mit anderen Worten kann bei Vorliegen einer Vielzahl von Bildpaketen für jedes Bildpaket eine Klassifizierung vorgenommen werden. Die Klassifizierung kann zwei Aussagen aufweisen. Zum einen kann klassifiziert werden, dass ein problemloser Betrieb möglich ist, zum anderen kann klassifiziert werden, dass ein Problem vorliegt. Ferner ist denkbar, dass die Klassifizierung in einer Zwei-Klassen-Klassifizierung ausgestaltet ist. Dadurch kann eine zügige Bestimmung des Zustands der Handhabungsvorrichtung bestimmt werden.

Vorzugsweise erfolgt ein Bestimmen des Zustands der Handhabungsvorrichtung in Echtzeit. Mit anderen Worten kann während des Betriebs der Handhabungsvorrichtung direkt auf den Zustand der Handhabungsvorrichtung zurückgeschlossen werden. Somit kann sichergestellt sein, dass ein Problem rechtzeitig erkannt wird und behoben werden kann. In Echtzeit kann hierbei bedeuten, dass der Zustand der Handhabungsvorrichtung nur mit sehr geringer Verzögerung bestimmt wird. Die geringe Verzögerung kann im Bereich von 1 bis 10 Sekunden liegen. Damit kann sichergestellt sein, dass rasch auf einen Zustand der Handhabungsvorrichtung reagiert werden kann.

Vorzugsweise werden zumindest zwei Bildpakete erzeugt, und wobei vorzugsweise in zeitlich aneinander angrenzenden Bildpaketen identische Bilder umfasst sind. Mit anderen Worten können sich zumindest zwei aneinander angrenzende Bildpakete überlappen. Damit können dieselben Bilder in zwei unterschiedlichen Bildpaketen vorgesehen sein. Besonders Vorteilhaft hat sich herausgestellt, wenn eine Überlappung der Bilder von zwei aneinander angrenzenden Bildpaketen größer als 50% ist. Mit anderen Worten kann ein einzelnes Bild in einer Vielzahl von Bildpaketen vorhanden sein. Dadurch kann die Bestimmung unter Zuhilfenahme von lernenden Algorithmen robuster implementiert sein. Bildpakete können also überlappend sein, d.h. jedes einzelne Bild kann in mehrere aufeinander folgende Bildpaketen umfasst sein.

Vorzugsweise umfasst ein nachfolgendes Bildpaket nur ein neues Bild, im Vergleich zu einem zuvor erzeugten Bildpaket. Beispielsweise kann ein Bildpaket fünf einzelne Bilder umfassen. Die Bilder können in der Reihenfolge, in dem Bildpaket aufgenommen sein, wie sie zeitlich aufgenommen worden sind. In einem darauffolgenden Bildpaket kann das zeitlich zuletzt aufgenommene Bild entfallen und ein neues Bild aufgenommen werden. In diesem Fall überlappen sich die beiden aneinander angrenzenden Bildpakete mit vier identischen Bildern. Dadurch kann die Erkennungsgenauigkeit des lernenden Algorithmus gesteigert werden.

Vorzugsweise wird die Handhabungsvorrichtung basierend auf dem bestimmten Zustand gesteuert. Somit kann eine direkte Steuerung der Handhabungsvorrichtung basierend auf dem bestimmten Zustand realisiert sein. Mit anderen Worten kann die Handhabungsvorrichtung, ohne dass ein Nutzer aktiv eingreifen muss gesteuert werden. Damit kann die Handhabungsvorrichtung auf etwaig auftretende Fehler reagieren. Beispielsweise kann in dem Fall, bei dem die Handhabungsvorrichtung ein Förderband ist, die Fördergeschwindigkeit reduziert oder erhöht werden, um den Zustand der Handhabungsvorrichtung zu verbessern. Dadurch kann der Automatisierungsgrad weiter gesteigert werden, wodurch die Effizienz erhöht sein kann.

Gemäß einer Ausführungsform der vorliegenden Erfindung wird ein Ergebnis des neuronalen Netzes dann an einen menschlichen Bediener übermittelt, um einen Stau auf dem Förderband physisch aufzulösen und den Normalbetrieb wiederherzustellen. Zu diesem Zweck wird ein "Ampel"-Ansatz vorgeschlagen: Bildsequenzen aus dem Bildpaket, die vom neuronalen Netz als "nicht staugefährdet" eingestuft werden, werden mit einer grünen Farbe, z.B. als Umrandung, markiert. Die vom neuronalen Netz als "Stau" eingestuften Sequenzen werden mit einer orangen Farbe markiert. Bleibt die Klassifizierung "Stau" des neuronalen Netzes mehrere Sekunden hintereinander bestehen, wechselt die Farbe zu rot. Bei einer gro-ßen Anzahl von Kamerastandpunkten können diese weiter gefiltert werden, indem dem Bediener nur die Standpunkte angezeigt werden, die derzeit entweder orange oder rot markiert sind oder dies vor kurzer Zeit waren, jetzt aber wieder grün markiert sind. Dieses Ampelkonzept liefert den Vorteil, dass es dem menschlichen Bediener signalisiert, wenn ein Stau mehrere Sekunden lang anhält, und so die Fehlerquote verringert. Außerdem wird die Arbeitsbelastung der menschlichen Bediener verringert, indem nur Kamerastandpunkte gezeigt werden, die gerade interessant sind, und Kamerastandpunkte weggelassen werden, die eine Zeit lang normal arbeiten.

Gemäß einem weiteren Aspekt der vorliegenden Erfindung wird ein Verfahren zum Trainieren oder Umtrainieren eines ersten lernenden Algorithmus und/oder eines zweiten lernenden Algorithmus zum Bestimmen eines Zustands einer Handhabungsvorrichtung für Poststücke bereitgestellt. Das Verfahren umfasst ein Empfangen von Eingangs-Trainingsdaten, nämlich kommentierte Bilder der Handhabungsvorrichtung während einer ersten Zeitspanne, wobei die Bilder in aufsteigender Zeitfolge, aufeinanderfolgend bereitgestellt werden, ein Empfang von Ausgangs-Trainingsdaten, nämlich einen Zustand der Handhabungsvorrichtung für Poststücke während der ersten Zeitspanne, und ein Trainieren, oder Umtrainieren des ersten lernenden Algorithmus und/oder des zweiten lernenden Algorithmus basierend auf den Eingangs-Trainingsdaten und den Ausgangs-Trainingsdaten.

Die Eingangs-Trainingsdaten können als Bildpakete bereitgestellt werden. Bei einem Training werden Gewichte und/oder Variablen eines lernenden Algorithmus angepasst, um den Fehler zu reduzieren. Das Training der lernenden Algorithmen kann durch eine Sammlung kommentierter Trainings- und Evaluierungsdaten erfolgen. Da die Erkennung eines Zustands als eine durchgängige Klassifizierungsaufgabe modelliert sein kann, sind keine Polygone oder explizite Objekterkennung notwendig. Die annotierten Trainingsdaten können aus den aufgenommenen Kamerabildern, die zeitlich aufsteigend und ohne fehlende Bilder bereitgestellt werden, bestehen. Somit ist kein Subsampling in der zeitlichen Dimension notwendig. Das Weglassen des Subsamplings kann den Prozess effizient machen. Dennoch kann es Situationen geben, bei denen das Subsampling notwendig ist. Das Subsampling kann beispielsweise eingesetzt werden um eine Bildrate pro Zeiteinheit der einzelnen Bilder auf eine gewünschte Bildrate anzupassen. Beispielsweise kann der erste und/oder zweite lernende Algorithmus auf Bilddaten mit einer bestimmten Bildrate pro Zeiteinheit trainiert worden sein. Während des Subsamplings kann diese Bildrate eingestellt werden. Mit anderen Worten kann bei Vorliegen der Eingangsdaten mit einer Bildrate von 30 Bilder pro Sekunde und bei Vorliegen eines lernenden Algorithmus, welcher mit einer Bildrate von 5 Bildern pro Sekunde trainiert wurde, während des Subsampling 25 Bilder der Eingangsdaten entfernt werden, so dass die Eingangsdaten zu dem lernen Algorithmus passen. Somit kann unter dem Subsampling ein Anpassen der Bildrate an die trainierten Bildrate bedeuten. Überflüssige Daten (z.B. Bilder) können ersatzlos weggestrichen werden. Die Annotation der Daten kann aus Intervallen (Von-bis-Bereichen), von Zeitstempel, die dem Beginn und dem Ende eines einzelnen Zustands zugeordnet sind, bestehen. Somit kann eine 1:1-Entsprechung zwischen physischen Zuständen auf der Handhabungsvorrichtung und den Intervallen in den annotierten Daten bestehen. Die Ende-zu-Ende Optimierung der lernenden Algorithmen kann einen überwachten Lernersatz mit Backpropagation und Gradienten-Abstieg umfassen. Die Eingabe in den lernenden Algorithmus kann ein Stapel von Bildern (d. h. ein Bildpaket) die genau den Bildern eines Bildpakets entsprechen, dass von der Kamera aufgenommen wurde. Die Ausgabe des lernenden Algorithmus kann eine probabilistische Zuordnung, ob dieser Stapel von Bildern einen bestimmten Zustand aufweist oder nicht umfassen. Eine Kreuzentropie-Verlustfunktion kann auf die Vorhersage des lernenden Algorithmus und die annotierten Wahrheitsintervalle angewendet werden, was den Optimierungsschritt für die Parameter des lernenden Algorithmus abschließt. Dabei kann der lernende Algorithmus erstmalig trainiert werden oder ein bereits bestehender lernender Algorithmus, umtrainiert werden. Beispielsweise ist es denkbar, dass man zu einer Optimierung einer Zustandserkennung zentral gesammelte Daten für ein Trainieren von einem lernenden Algorithmus nutzt. Vorzugsweise kann das Trainieren, oder das Umtrainieren ein Ende-zu-Ende-Optimierung mittels Back-Propagation und/oder Gradienten Abstieg umfassen.

Gemäß einem weiteren Aspekt der vorliegenden Erfindung wird ein Computerprogramm bereitgestellt, dass Anweisungen umfasst, die, wenn das Programm von einer Rechnereinheit ausgeführt wird, die Recheneinheit veranlasst, dass Verfahren gemäß einer der obigen Ausführungsformen auszuführen. Dies gilt sowohl für das Verfahren zur Bestimmung eines Zustands einer Handhabungsvorrichtung als auch für das Trainingsverfahren für den ersten und/oder den zweiten lernenden Algorithmus. Alternativ können die lernenden Algorithmen auch als Hardware implementiert werden, z.B. mit festen Verbindungen auf einem Chip oder einer anderen Rechnereinheit. Bei der Rechnereinheit, die das erfindungsgemäße Verfahren ausführen kann, kann es sich um eine beliebige Rechnereinheit wie eine CPU (Central Processing Unit) oder GPU (Graphics Processing Unit) handeln. Die Rechnereinheit kann Teil eines Computers, einer Cloud, eines Servers, eines mobilen Geräts wie eines Laptops, Tablet-Computers, Mobiltelefons, Smartphones usw. sein. Insbesondere kann die Rechnereinheit Teil eines Überwachungssystems zum Bestimmen eines Zustands einer Handhabungsvorrichtung sein. Das Überwachungssystem kann eine Anzeigevorrichtung, wie einen Computerbildschirm umfassen.

Die Erfindung bezieht sich auch auf ein computerlesbares Medium, dass Anweisungen umfasst, die, wenn sie von einer Recheneinheit ausgeführt werden, die Rechnereinheit veranlassen, das erfindungsgemäße Verfahren, insbesondere das obige Verfahren durchzuführen. Ein solches computerlesbares Medium kann ein beliebiges digitales Speichermedium sein, beispielsweise eine Festplatte, ein Server, eine Cloud oder ein Computer, ein optisches oder ein magnetisches digitales Speichermedium, eine CD-ROM, eine SSD Karte, eine SD Karte, eine DVD oder ein USB oder anderer Speicherstick. Ferner kann das Computerprogramm auch über das Internet bezogen werden.

Gemäß einem weiteren Aspekt der vorliegenden Erfindung wird eine Handhabungsvorrichtung zum Handhaben von Poststücken bereitgestellt. Die Handhabungsvorrichtung umfasst zumindest eine Sub-Komponente zum Handhaben von Poststücken, und eine Steuereinheit, die dazu ausgestaltet ist, die zumindest eine Sub-Komponente basierend auf dem Zustand der Handhabungsvorrichtung zu steuern, wobei der Zustand der Handhabungsvorrichtung durch ein Verfahren gemäß einer der obigen Ausführungsformen bestimmt wird. Diese Komponente kann beispielsweise ein Förderband, Greifer, oder jede andere Manipulationsvorrichtung sein, die dazu ausgestaltet ist, ein Poststück physisch zu beeinflussen.

Gemäß einem weiteren Aspekt der vorliegenden Erfindung wird ein Überwachungssystem zum Bestimmen eines Zustands einer Handhabungsvorrichtung zum Handhaben von Poststücken bereitgestellt. Das Überwachungssystem kann eine Steuereinheit umfassen, die dazu ausgestaltet ist, ein Verfahren gemäß einer der obigen Ausführungsformen auszuführen.

Das Überwachungssystem kann eine Ausgabe einer zum Ausgeben des Zustands der Handhabungsvorrichtung fassen. Gemäß einem weiteren Aspekt der vorliegenden Erfindung wird eine Verwendung des Überwachungssystems zur Bestimmung eines Zustands einer Handhabungsvorrichtung bereitgestellt. Das Überwachungssystem kann dabei der obigen Ausführungsformen entsprechen.

Gemäß einer Ausführungsform wird der Vorteil bereitgestellt, dass das beschriebene neuronale Netz eine implizite Darstellung des Förderbandes, der Poststücke und ihrer normalen Abläufe erlernen kann. Die Zeit wird implizit kodiert oder explizit beibehalten, was in beiden Fällen die Erkennung von Staus auf dem Förderband ermöglicht. Die Vorteile liegen darin, dass das Gesamtsystem sehr robust ist, da das neuronale Netz durchgängig optimiert ist. Die Optimierung ist ein überwachter Lernansatz, aber die kommentierten Trainingsdaten sind kostengünstig zu produzieren, da sie nur aus Kamerabildern in Kombination mit Zeitintervallen (von Zeitstempel zu Zeitstempel) bestehen, die einen Stau auf dem Förderband zeigen. Der Ampelansatz entlastet die menschlichen Bediener und verringert die Fehlerquote des gesamten Erkennungssystems. Der Hauptvorteile einer Ausführungsform der vorliegenden Erfindung ist, dass es sich um einen End-to-End-Ansatz ohne Zwischenschritte handelt und dass ein "Ampel"-Ansatz angewandt wird, um den menschlichen Bedienern nur interessante Kameraperspektiven zu zeigen.

Einzelne Merkmale oder Ausführungsformen können mit anderen Merkmalen oder anderen Ausführungsform kombiniert werden und so neue Ausführungen bilden. Vorteile und Ausgestaltungen, die in Zusammenhang mit den einzelnen Merkmalen oder den Ausführungsform genannt sind, gelten dann analog auch für die neue Ausführungsform. Vorteile und Ausgestaltungen, die in Zusammenhang mit dem Verfahren genannt sind, gelten analog auch für die Vorrichtung und andersherum.

Im Folgenden werden zu bevorzugende Ausführungsform der vorliegenden Erfindung mit Bezug auf die beigefügten Figuren beschrieben.
- **Fig. 1**: ist eine schematische Ansicht einer Handhabungsvorrichtung gemäß einer Ausführungsform der vorliegenden Erfindung.
- **Fig. 2**: ist ein schematisches Ablaufdiagramm eines Verfahrens gemäß einer Ausführungsform der vorliegenden Erfindung.
- **Fig. 3**: ist ein schematisches Ablaufdiagramm eines Verfahrens gemäß einer Ausführungsform der vorliegenden Erfindung.
- **Fig. 4**: ist eine schematische Darstellung eines Aspekts der vorliegenden Erfindung.

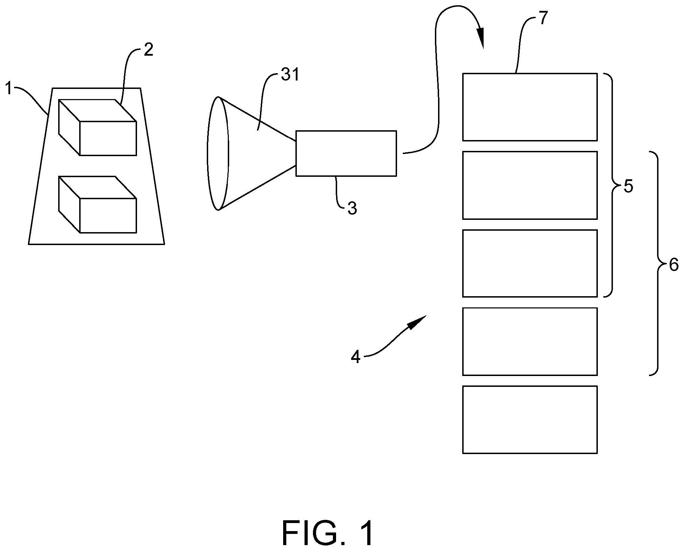

**Fig. 1** ist eine schematische Darstellung eines Handhabungssystems 1 gemäß einer Ausführungsform der vorliegenden Erfindung. Zusätzlich ist auf der rechten Seite der Fig. 1 schematisch ein Bilddatenstrom 4 mit einer Vielzahl von einzelnen Bildern 7 dargestellt. Die Handhabungsvorrichtung 1 der vorliegenden Ausführungsform ist dazu ausgestaltet, Poststücke 2 zu handhaben. Bei der vorliegenden Ausführungsform ist die Handhabungsvorrichtung 1 ein Förderband, welches Poststücke 2 in eine Förderrichtung bewegt. Ferner ist eine Videokamera 3 vorgesehen, die die Handhabungsvorrichtung 1 abbilden kann. Die Kamera 3 weist einen Blickwinkel 31 auf, mit welchem die Handhabungsvorrichtung 1 abgebildet wird. Die Kamera 3 ist vorzugsweise eine Videokamera. Die Kamera 3 gibt als Ausgabe einen Bilddatenstrom 4 aus. Der Bilddatenstrom 4 weist eine Vielzahl von einzelnen Bildern 7 auf. Bei der vorliegenden Ausführungsform wird der Bilddatenstrom 4 direkt von der Kamera erlangt. Aus dem Bilddatenstrom 4 werden dann Bildpakete 5, 6 erzeugt. Jedes Bildpaket 5, 6 weist eine bestimmte Anzahl von einzelnen Bildern 7 auf. Bei der vorliegenden Ausführungsform weist das erste Bild Paket 5 drei einzelne Bilder 7 des Bilddatenstroms 4 auf. Das zweite Bildpaket 6 weist ebenfalls drei einzelne Bilder 7 auf. Es können insgesamt eine Vielzahl von Bildpaketen vorgesehen sein, die alle dieselbe Anzahl an einzelnen Bildern 7 aufweisen können. Das erste Bildpaket 5 und das zweite Bildpaket 6 überlappen sich insofern, als dass sie zwei identische einzelne Bilder 7 umfassen. Mit anderen Worten unterscheiden sich das erste Bildpaket 5 und das zweite Bildpaket 6 dahingehend, dass sie ein unterschiedliches Bild aufweisen, welches das jeweils andere Bildpaket nicht aufweist. Die Bildpakete werden dann einem ersten lernenden Algorithmus 9 zugeführt. Der erste lernende Algorithmus 9 extrahiert oder bestimmt dann Merkmale 8 für jedes Bild eines Bildpakets.

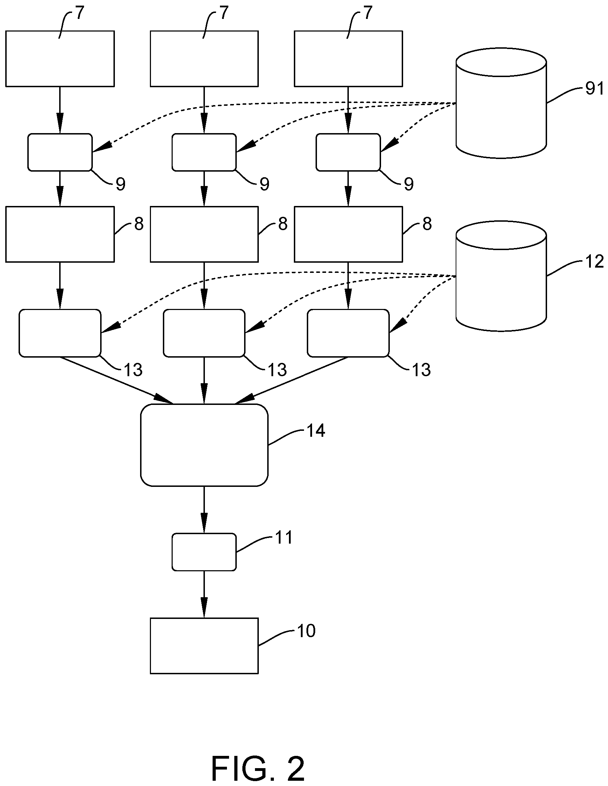

**Fig. 2** ist eine schematische Ansicht einer Funktionsweise einer Ausführungsform der vorliegenden Erfindung. In Fig. 2 werden die einzelnen Bilder 7 eines Bildpakets zugeführt. Jedes Bild 7 eines Bildpakets 5, 6, wird dem ersten lernenden Algorithmus 9 zugeführt. Dabei wird jedes Bild 7 mit denselben trainierten Parametern des 91 des ersten lernenden Algorithmus analysiert. Als Ausgabe des ersten lernenden Algorithmus 9 kommen Merkmale für jedes Bild 7 eines Bildpakets 5, 6 als Ausgabe heraus. Optional kann ein Bereich von Interesse 12 in jedem der Bilder bestimmt sein. Bei der vorliegenden Ausführungsform wird ein Bereich von Interesse bestimmt. Dies ist jedoch optional und kann auch weggelassen werden. Basierend auf dem Bereich von Interesse 12 wird eine Pixelmaske 13 bereitgestellt. Die Pixelmaske 13 wird dann auf die von dem ersten lernenden Algorithmus 9 bestimmten Merkmale 8 angewendet. Damit werden diejenigen Merkmale, die unter der Pixelmaske liegen, verdeckt. Anschließend können die Merkmale 8 eines Bildpakets gestapelt werden. Die Staffelung 14 wird für jedes Bildpaket 5, 6 einzeln ausgeführt. Die gestapelten Merkmale werden dann dem zweiten lernenden Algorithmus 11 zugeführt. Der bestimmt basierend auf den Merkmalen der einzelnen Bilder einen Zustand 10 der Handhabungsvorrichtung. In einer weiteren Ausführungsform kann bei dem Stapeln 14 darüber hinaus die zeitliche und räumliche Dimension in den extrahierten Merkmalen 8 weggelassen werden. Dies ist besonders bei der Verwendung eines Multi-Layer-Perceptrons als zweiten lernenden Algorithmus 11 vorteilhaft.

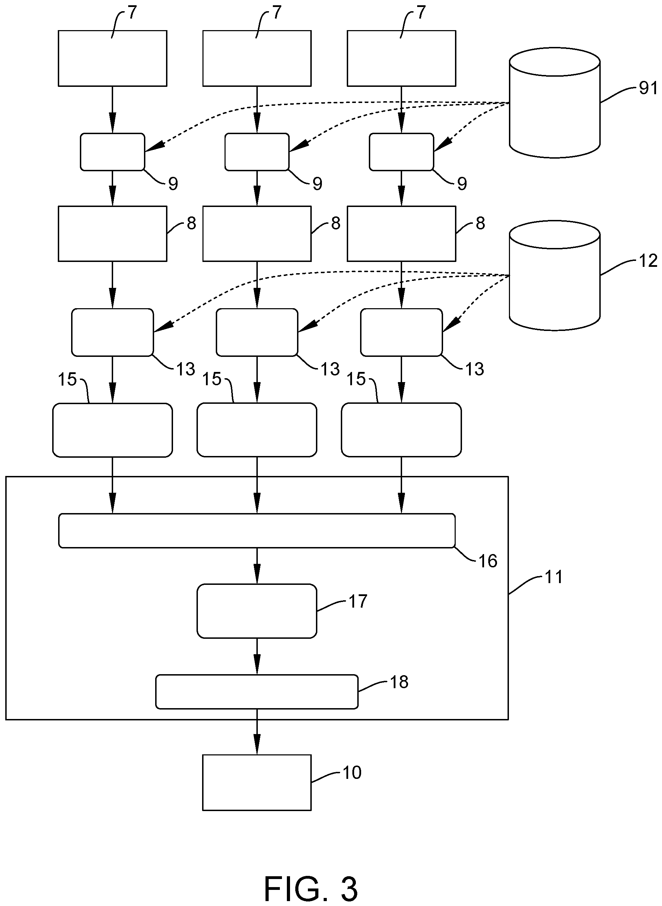

**Fig. 3** ist ein schematisches Ablaufdiagramm eines Verfahrens gemäß einer weiteren Ausführungsform der vorliegenden Erfindung. Bis zum Schritt 13 entspricht die vorliegende Ausführungsform der in Fig. 2 beschriebenen Ausführungsform. Nach dem Schritt 13 kann bei der vorliegenden Ausführungsform ein Weglassen der räumlichen Dimension 15 für die extrahierten Merkmale eines jeden einzelnen Bildes 7 erfolgen. Anschließend können die extrahierten Merkmale dem zweiten lernenden Algorithmus 11, welches bei der vorliegenden Ausführungsform als ein Long-Short-Term-Memory ausgestaltet ist, zugeführt werden. das LSTM der vorliegenden Ausführungsform ist ein bidirektionales LSTM 16. Darauffolgend kann eine zeitliche Dimension weggelassen werden 17. Daraufhin können die extrahierten Merkmale einem Feed Forward Neural Layer 18 zugeführt werden. Darauf basierend, kann ein Zustand 10 der Handhabungsvorrichtung ausgegeben werden.

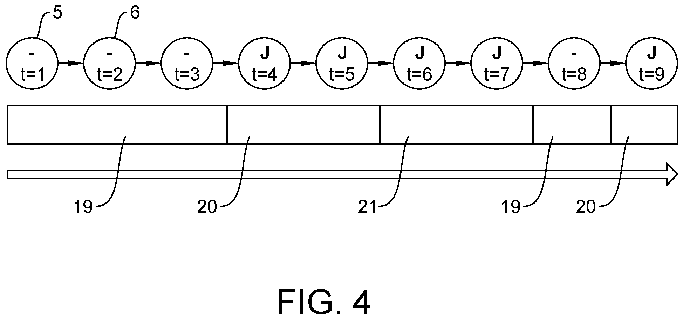

**Fig. 4** stellt eine schematische Darstellung einer weiteren Ausführungsform der vorliegenden Erfindung dar. Die runden Kreise symbolisieren die einzelnen Bildpakete und den jeweiligen Zeitpunkt, an welchen diese aufgenommen worden. Das erste Bildpaket 5 wurde beispielsweise zu einem Zeitpunkt t = 1 aufgenommen.

Das zweite Bildpaket 6 wurde zu einem Zeitpunkt t = 2 aufgenommen. Entsprechendes gilt für die weiteren dargestellten n Bildpakete. Ist ein Strich in dem Bildpaket dargestellt, so ist keine Auffälligkeit bei der Bestimmung des Zustands der Handhabungsvorrichtung 1 aufgetreten. Ist eine "J" dargestellt, liegt eine Anomalie im Betrieb der Handhabungsvorrichtung vor (bei der vorliegenden Ausführungsform ein Stau; J=Jam). Bei der vorliegenden Ausführungsform werden die Zustandsergebnisse bewertet. Bei den ersten drei Bildpaketen ist keine Auffälligkeit festgestellt worden, weswegen hier die erste Qualität 19 (z.B. grün) zugeordnet werden kann. Bei dem vierten und fünften Bildpaketen ist angezeigt, dass eine Anomalie vorliegt. Dies wird als zweite Qualität 20 (orange) definiert. Bei der zweiten Qualität 20 ist noch keine akute Notwendigkeit vorhanden Gegenmaßnahmen einzuleiten. Erst bei dem sechsten Bildpaket wird die dritte Qualitätsstufe 21 (rot) angezeigt. Hierbei ist nun einige Zeit vergangen, und es kann davon ausgegangen werden, dass die Anomalie sich nicht von selber auflöst. Das gleiche gilt für das siebte Bildpaket. Bei dieser Qualitätsstufe wird ein Nutzer aufgefordert Gegenmaßnahmen zu ergreifen. Im vorliegenden Fall ist dies geschehen, sodass bei dem achten Bildpaket wieder die erste Qualitätsstufe 19 (grün) angezeigt wird. Der zeitliche Verlauf verläuft im vorliegenden Beispiel von der linken Bildseite zu rechten Bildseite (siehe Pfeil).

### Bezugszeichenliste:

- 1: Handhabungsvorrichtung
- 2: Poststück
- 3: Kamera
- 4: Bilddatenstrom
- 5: erstes Bildpaket
- 6: zweites Bildpaket
- 7: Bilder
- 8: Merkmale
- 9: erster lernender Algorithmus
- 10: Zustand der Handhabungsvorrichtung
- 11: zweiter lernender Algorithmus
- 12: Bereich von Interesse
- 13: Pixelmaske
- 14: Stapeln
- 15: räumliche Dimension
- 16: Bidirektionales LSTM
- 17: zeitliche Dimension
- 18: Neuronale Schicht mit Vorwärtskopplung
- 19: erste Qualität
- 20: zweite Qualität
- 21: dritte Qualität

## Patentansprüche

1. Computerimplementiertes Verfahren zur Bestimmung eines Zustands (10) einer Handhabungsvorrichtung (1) für Poststücke (2), umfassend:
a) Bestimmen oder Erlangen eines Bilddatenstroms (4) der Handhabungsvorrichtung (1) bei einem Handhaben von Poststücken (2),
b) Erzeugen zumindest eines Bildpakets (5,6) aus dem Bilddatenstrom (4), wobei das Bildpaket (5) eine Vielzahl einzelner Bilder (7) umfasst,
c) Bestimmen von Merkmalen (8) jedes Bildes (7) eines Bildpakets (5,6) mittels eines ersten lernenden Algorithmus (9), und
d) Bestimmen des Zustands (10) der Handhabungsvorrichtung (1) basierend auf den Merkmalen (8) jedes Bildes (7) eines Bildpakets (5,6) mittels eines zweiten lernenden Algorithmus (11),
wobei sich der erste lernenden Algorithmus (9) von dem zweiten lernenden Algorithmus (10) unterscheidet.

2. Verfahren gemäß Anspruch 1, wobei der erste lernende Algorithmus (9) eine Merkmalskarte für jedes Bild eines Bildpakets (5, 6) bestimmt.

3. Verfahren gemäß Anspruch 1 oder 2,
wobei es sich bei dem ersten lernenden Algorithmus (9) um ein künstliches neuronales Netz handelt, insbesondere ein Convolutional Neural Network, und/oder
wobei es sich bei dem zweiten lernenden Algorithmus (11) um ein künstliches neuronales Netz handelt, insbesondere ein Multi-Layer Perceptron oder Long Short-Term Memory.

4. Verfahren gemäß einem der vorhergehenden Ansprüche, wobei das Verfahren ferner umfasst:
Bestimmen eines Bereichs von Interesse (12) in den Bildern (7), wobei insbesondere nur die Merkmale (8) im Bereich von Interesse (12) bei der Bestimmung des Zustandes (10) zugrunde gelegt werden.

5. Verfahren gemäß einem der vorhergehenden Ansprüche, wobei der Zustand (10) indikativ für eine Wahrscheinlichkeit ist, dass ein Stau von Poststücken (2), senkrecht stehende Poststücke (2), beschädigte Poststücke (2), Doppel-/Mehrfachpackungen von Poststücken (2), von der Handhabungsvorrichtung (1) gefallene Poststücke, steckengebliebene Poststücke (2), verschüttete Flüssigkeiten und/oder loser Poststückeinhalt in der Handhabungsvorrichtung (1) vorliegt.

6. Verfahren gemäß einem der vorhergehenden Ansprüche, wobei das Verfahren ferner umfasst:
Bewerten des Zustands (10), wobei die Bewertung indikativ für eine Qualität (19,20,21) des Zustands (10) ist.

7. Verfahren gemäß einem der vorhergehenden Ansprüche, wobei das Erzeugen zumindest eines Bildpakets (5) ein Skalieren und/oder anpassen der Auflösung der Bilder (7) eines Bildpakets (5) umfasst, insbesondere ein Skalieren auf einen RGB-Wert.

8. Verfahren gemäß einem der vorhergehenden Ansprüche, wobei vor dem Bestimmen des Zustands (10) der Handhabungsvorrichtung (1) die Merkmale (8) der Bilder (7) eines Bildpakets (5) gestapelt (14) werden.

9. Verfahren gemäß einem der vorhergehenden Ansprüche, wobei das Bestimmen des Zustands (10) der Handhabungsvorrichtung (1) eine Klassifizierung der Merkmale (8) eines Bildpakets (5) ist.

10. Verfahren gemäß einem der vorhergehenden Ansprüche, wobei zumindest zwei Bildpakete (5) erzeugt werden, und wobei in zeitlich aneinander angrenzende Bildpakete (5) identische Bilder (7) umfasst sind.

11. Verfahren gemäß einem der vorhergehenden Ansprüche, wobei ein nachfolgendes Bildpaket (5, 6) nur ein neues Bild, im Vergleich zu einem zuvor erzeugten Bildpaket (5, 6), umfasst.

12. Verfahren gemäß einem der vorhergehenden Ansprüche, wobei der Bilddatenstrom (4) von einer Videokamera erzeugt oder erlangt wird.

13. Verfahren zum Trainieren oder Umtrainieren eines ersten lernenden Algorithmus (9) und/oder eines zweiten lernenden Algorithmus (11) zum Bestimmen eines Zustands (10) einer Handhabungsvorrichtung (1) für Poststücke (2), umfassend:
Empfangen von Eingangs-Trainingsdaten, nämlich kommentierte Bilder (7) der Handhabungsvorrichtung (1) während einer ersten Zeitspanne, wobei die Bilder (7) in aufsteigender Zeitfolge, aufeinander folgend bereitgestellt werden,
Empfangen von Ausgangs-Trainingsdaten, nämlich einen Zustand (10) der Handhabungsvorrichtung (1) für Poststücke (2) während der ersten Zeitspanne,
Trainieren oder Umtrainieren des ersten lernenden Algorithmus (9) und/oder des zweiten lernenden Algorithmus (11) basierend auf den Eingangs-Trainingsdaten und den Ausgangs-Trainingsdaten.

14. Ein Computerprogramm, das Anweisungen umfasst, die, wenn das Programm von einer Recheneinheit ausgeführt wird, die Recheneinheit veranlassen, das Verfahren gemäß einem der Ansprüche 1 bis 12 auszuführen.

15. Überwachungssystem zum Bestimmen eines Zustands (10) einer Handhabungsvorrichtung (1) zum Handhaben von Poststücke (2), umfassend:
eine Steuereinheit, die dazu ausgestaltet ist, ein Verfahren gemäß einem der Ansprüche 1 bis 12 auszuführen.
